Europäisches Patentamt

European Patent Office

Office européen des brevets

(11) Veröffentlichungsnummer: **0 336 154**
**A2**

(12) **EUROPÄISCHE PATENTANMELDUNG**

(21) Anmeldenummer: **89104596.5**

(22) Anmeldetag: **15.03.89**

(51) Int. Cl.⁴: **C08J 7/04 , C08F 2/50 , C08F 255/06 , //(C08F255/06, 220:10)**

(30) Priorität: **31.03.88 DE 3811021**

(43) Veröffentlichungstag der Anmeldung:
**11.10.89 Patentblatt 89/41**

(84) Benannte Vertragsstaaten:
**AT BE CH DE ES FR GB GR IT LI LU NL SE**

(71) Anmelder: **Teroson GmbH**
**Hans-Bunte-Strasse 4**
**D-6900 Heidelberg 1(DE)**

(72) Erfinder: **Lucke, Heinz**
**Heidelberger Strasse 58**
**D-6915 Dossenheim(DE)**

(74) Vertreter: **UEXKÜLL & STOLBERG**
**Patentanwälte**
**Beselerstrasse 4**
**D-2000 Hamburg 52(DE)**

(54) **Polymerisationsfähige Haftgrundierung und Verfahren zu ihrer Anwendung.**

(57) Es werden eine polymerisationsfähige Haftgrundierung für Polymere, die 60 bis 85 Gew.% eines Methacrylsäureester-Monomers, welches eine Quellung des Polymers auf Kohlenwasserstoffbasis von 10 bis 50 Gew.% bewirkt, 5 bis 30 Gew.% in dem Monomer gut lösliches Elastomer, 0,5 bis 15 Gew.% Plastomerharz und, bezogen auf das eingesetzte Monomer, 0,5 bis 5 Gew.% Photoinitiator enthält, und ein Verfahren zu ihrer Anwendung insbesondere bei Polymer-Dachbahnen auf der Basis von EPDM-Elastomer angegeben.

EP 0 336 154 A2

## Polymerisationsfähige Haftgrundierung und Verfahren zu ihrer Anwendung

Die Erfindung betrifft eine polymerisationsfähige Haftgrundierung für Polymere und Verfahren zu ihrer Anwendung, insbesondere um Dachbahnen auf der Basis von Ethylen-Propylen-Dien-Polymeren (EPDM) abdichtend verklebbar zu machen.

Ganz allgemein ist die Möglichkeit, Polymere, wie z.B. Polymerdachbahnen, zu verkleben oder zu beschichten, in hohem Maße von der chemischen Struktur des jeweiligen Polymeren abhängig. Im Bereich der Polymerdachbahnen unterscheidet man zwischen den Elastomer-Dachbahnen und den thermoplastischen Kunststoff-Dachbahnen. Je nachdem, ob diese Dachbahnen kaschiert, nicht kaschiert, verstärkt, nicht verstärkt oder kaschiert und verstärkt sind, kann man sie mit Hilfe verschiedener Abdichtungs- und Verklebungsverfahren, wie z.B. Quellschweißen, Warmgasschweißen, HF-Schweißen, Vulkanisation, Verklebung mittels vorbeschichteter Nähte und Kanten oder Klebebändern, Verklebung mit Kontakt- oder Haftklebstoffen oder mit mechanischen Verbindungsmethoden mehr oder weniger fest miteinander verbinden.

Probleme treten insbesondere bei Polymer-Dachbahnen auf Kohlenwasserstoffbasis auf, insbesondere solchen auf der Basis von Ethylen-Propylen-Dien-Monomer-Elastomer (EPDM), die infolge ihrer strukturbedingten unpolaren Oberfläche, insbesondere in ihrer nicht kaschierten Form mit Hilfe von konventionellen Verfahren nur sehr unbefriedigend abdichtend verklebbar sind. Das führt dazu, daß es im Bereich der EPDM-Nahtverbindungen immer wieder zu schwerwiegenden Ablösungserscheinungen kommt, die schließlich zu folgenschweren Undichtigkeiten und damit z.B. zu Wassereinbrüchen in dem Raum unter den betreffenden Dachbahnen führen können.

Die unpolare Oberfläche von Polymeren auf Kohlenwasserstoffbasis führt ebenfalls dazu, daß aufgebrachte Beschichtungen häufig schlecht haften und zur Ablösung neigen.

Da gerade Polymerdachbahnen auf der Basis von EPDM-Elastomer von ihren Grundeigenschaften her zu den höchstwertigen Dachbahnmaterialien zählen, wäre es sehr wünschenswert, Mittel zur Verfügung zu stellen, mit deren Hilfe die sichere abdichtende Verklebung von EPDM-Dachbahnen möglich ist.

Aus John A. Manson und Leslie H. Sperling "Polymerblends and Composites", Plenum Press, New York und London, 1977, S. 53 -54, 237 ff sind Monomer-Elastomer-Plastomer-Systeme bekannt, die nach der Polymerisation zu Composites führen, die deutlich erhöhte Festigkeit gegenüber den Homopolymerisaten aufweisen und daher z.B. in schlagfesten Kunststoffen Anwendung finden.

Der Erfindung liegt die Aufgabe zugrunde, Haftgrundierungen und Verfahren zu ihrer Anwendung zur Verfügung zu stellen, mit deren Hilfe Polymere auf Kohlenwasserstoffbasis, insbesondere Polymerdachbahnen auf der Basis von EPDM-Elastomer, beschichtbar und/oder abdichtend verklebbar gemacht und baustoffe schutzbeschichtet werden können.

Diese Aufgabe wird überraschenderweise durch die erfindungsgemäße polymerisationsfähige Haftgrundierung nach Anspruch 1 bis 4 und das erfindungsgemäße Verfahren zu ihrer Anwendung nach Anspruch 5 bis 11 gelöst.

Die erfindungsgemäße Haftgrundierung enthält 60 bis 85 Gew.% Methacrylsäureester-Monomer, 5 bis 30 Gew.% in dem Monomer lösliches Elastomer, 0,5 bis 15 Gew.% Plastomerharz und bezogen auf das eingesetzte Monomer 0,5 bis 5 Gew.% Photoinitiator.

Geeignet für die Verwendung in der polymerisationsfähigen Haftgrundierung sind solche Methacrylsäureester-Monomere, die zu einer Quellung der zu verklebenden und/oder zu beschichtenden Polymere von 10 bis 50 Gew.% führen, bevorzugt Methacrylsäureester eines $C_4$- bis $C_8$-Alkohols oder Mischungen davon, besonders bevorzugt n-Butylmethacrylat, iso-Butylmethacrylat, Octylmethacrylat oder 1,4-Butandioldimethacrylat oder Mischungen davon.

Die ausgewählten monomeren Methacrylsäureester rufen bei Verwendung der Haftgrundierung zum Verkleben von EPDM-Dachbahnen zum einen zwar eine gewisse Quellung der EPDM-Dachbahn hervor und ermöglichen damit das Eindringen der Haftgrundierung in die Dachbahn, zum anderen verursachen sie jedoch keine irreversible Verwerfung der Dachbahn.

Geeignete Elastomere sind Elastomere, die in den ausgewählten Methacrylsäureester-Monomeren gut löslich sind, wie z.B. Chloropren-Kautschuk, Butadien-Kautschuk, Styrol-Butadien-Kautschuk, Isopren-Kautschuk, Isopren-Isobutylen-Kautschuk, chlorsulfoniertes Methylen, Styrol-Ethylen-Butadien-Styrol-Blockcopolymerisate, Styrol-Ethylen-Propylen-Styrol-Blockcopolymerisate, Ethylen-Propylen-Dien-Monomer-Terpolymer, Polyurethan-Elastomer und Mischungen davon.

Vorteilhafterweise wird das Elastomer derart ausgewählt, daß es mit dem später einzusetzenden Abdichtungs- und/oder Verklebungsmittel und/oder der nachträglich aufgebrachten Beschichtung verträglich ist. Daraus folgt, daß beispielsweise bei der Verwendung eines Chloropren-Kautschuk-Kontaktklebers als Klebemittel Chloropren-Kautschuk-Elastomer und bei der Verwendung eines Isopren-Isobutylen-Kautschuk/Polisobutylen-Klebebandes als Klebemittel Isopren-Isobutylen-Kautschuk/Polyisobutylen-Elastomer in der erfindungsgemäßen Haftgrundierung bevorzugt Anwendung finden.

Die polymerisationsfähigen Haftgrundierungen enthalten außerdem feste oder flüssige Plastomerharze, wie z.B. Ketonharze und Alkydharze, mit deren Hilfe die Flexibilität, Klebrigkeit und Haftung der erfindungsgemäßen Haftgrundierung gesteuert werden kann. Die Plastomerharze ebenso wie die Elastomere sind dabei so ausgewählt, daß sie die Polymerisation der Haftgrundierung nicht behindern.

Die Haftgrundierung enthält überdies geeignete Photoinitiatoren, z.B. Arylketone wie 1-Hydroxycyclohexylphenylketon, 2-Hydroxy-2-methyl-1-phenyl-propan-1-on und 1-(4-Isopropylphenyl)-2-hydroxy-2-methylpropan-1-on, Acetophenone, Benzophenone, Benzile, Benzilketale, wie z.B. Benzildimethylketal, Benzoine, Acylphosphinoxide, wie z.B. 2,4,6-Trimethylbenzoyldiphenylphosphinoxid, Thioxanthone, wie z.B. Isopropylthioxanthon, arylsulfonsaure Salze, wie z.B. Triarylsulfoniumhexafluorophosphat und Bis[(4-Diphenyl(sulfino)phenyl]sulfid-bis-hexafluorphosphat, und bevorzugt Ferrocen-hexafluorophosphate, wie z.B. ($\eta^5$-2,4-Cyclopentadien-1-yl)[1,2,3,4,5,6-$\eta$-(1-methyl-ethyl)-benzol]-eisenhexafluorophosphat.

Dual wirkenden Photoinitiatoren, d.h. Substanzen, die auf Anregung mit UV und/oder IR-Strahlung bei Polymerisationen initiierend wirken, können außerdem noch radikalisch wirkende, organische Peroxid- oder Hydroperoxid-Katalysatoren, wie z.B. Benzoylperoxid, Lauroylperoxid und Cumolhydroperoxid, zugesetzt werden. Dual wirkende Photoinitiatoren sind z.B. die bevorzugt verwendeten Ferrocen-hexafluorophosphate.

Weiter können die erfindungsgemäßen Haftgrundierungen konventionelle thixotropierend, pigmentierend, füllend und/oder stabilisierend wirkende Zusätze enthalten.

Die erfindungsgemäßen polymerisationsfähigen Haftgrundierungen werden in an sich bekannter Weise, wie z. B. durch Rakeln, Gießen und Walzen, auf die zu verklebenden und/oder zu beschichtenden Polymeren, bevorzugt auf Polymer-Dachbahnen auf der Basis von EPDM-Elastomer, in Schichtstärken von bevorzugt 50 bis 200 $\mu$m naß aufgebracht und anschließend mit Hilfe von UV-Strahlung, bevorzugt mit einer Wellenlänge im Bereich von 400 bis 100 nm, besonders bevorzugt 380 bis 280 nm, und/oder durch IR-Strahlung auspolymerisiert.

Die auf diese Weise durch photoinitiierte Polymerisation auf die Polymere aufgebrachten Haftgrundierungsschichten sind nach der Polymerisation festhaftend und flexibel auf der Oberfläche der Polymere verankert und wirken infolge ihrer polaren Struktur als polarer Haftgrund für die nachfolgenden Verklebungen, Abdichtungen und/oder Beschichtungen mit herkömmlichen Klebstoffen, Dichtstoffen und/oder Beschichtungen, wodurch eine sichere dauerhafte und abdichtende Verbindung zwischen den zu verklebenden Polymeren und/oder zwischen dem Polymeren und der aufgebrachten Beschichtung gewährleistet wird.

Damit ist das erfindungsgemäße Verfahren insbesondere den herkömmlichen Verfahren zur Verbindung von Polymer-Dachbahnen auf der Basis von EPDM-Elastomer deutlich überlegen. Mit seiner Hilfe kann praktisch jede gängige EPDM-Dachbahn abdichtend verklebbar gemacht werden.

Neben der geschilderten besonders bevorzugten Anwendung der erfindungsgemäßen Haftgrundierung bei Polymer-Dachbahnen auf der Basis von EPDM-Elastomer können ebenfalls andere unpolare Polymere auf Kohlenwasserstoffbasis, wie z. B. Polyethylen, Polypropylen und deren Copolymerisate, insbesondere Polymere auf EPDM-Basis, erfindungsgemäß in vorteilhafter Weise beschichtbar und/oder abdichtend verklebbar gemacht werden.

Weitere bevorzugte Verwendungen der Haftgrundierung sind daher die Verklebung und/oder Beschichtung von in der Autoindustrie vielfach benutzten EPDM-Elastomerteilen und die Verklebung von Skilaufflächen auf Polypropylen-Basis mit Polymeren. Außerdem kann die Haftgrundierung bevorzugt als Kaschierungsmittel dienen, wobei sie nach Auftragen auf das zu kaschierende Polymer mittels UV/IR-Strahlung lediglich anpolymerisiert und damit reaktiviert wird, bevor das Kaschieren durchgeführt wird.

Wenn die Haftgrundierung als Monomer einen Methacrylsäureester eines C$_4$- bis C$_8$-Alkohols oder Mischungen davon, vorzugsweise n-Butylmethacrylat, iso-Butylmethacrylat, Octylmethacrylat, 1,4-Butandioldimethacrylat oder Mischungen davon, enthält, kann sie auf Baustoffe aufgebracht und anschließend polymerisiert als Imprägnierungsbeschichtung Verwendung finden. Derart beschichtete Baustoffe, vorzugsweise Sandstein, sind gegenüber Umwelteinflüssen, wie z. B. saure Gase, in ausgezeichneter Weise geschützt.

Die Erfindung wird durch die nachfolgenden Beispiele noch näher erläutert.

Beispiele 1 bis 6

In der untenstehenden Tabelle 1 sind die Zusammensetzungen der Beispiele 1 bis 6 für erfindungsgemäße Haftgrundierungen in Gew.% aufgeführt. Den angegebenen Monomer-Elastomer-Plastomer-Systemen können gegegebenenfalls erforderliche Additive wie Pigmente, Füllstoffe, Thixotropiermittel und/oder Stabilisatoren auch in Form von Elastomer-Additiv-Batchen zugegeben werden, die sich in dem Monomer sehr gut lösen. Zu dieser Mischung wurde dann noch der ausgewählte Photoinitiator gegeben und die erhaltene Haftgrundierung mit Hilfe von UV-Strahlung mit oder ohne IR-Anteil auf verschiedene Polymer-Dachbahnen auf EPDM-Basis aufpolymerisiert. Die resultierenden Haftgrundierungsschichten erwiesen sich als festhaftend, flexibel, dehnbar, wasserbeständig und haftungsfreundlich für nachfolgende Beschichtungen mit herkömmlichen Kleb- und/oder Dichtstoffen.

Die auf diese Weise mit den aufpolymerisierten Haftgrundierungen versehenen EPDM-Dachbahnen wurden anschließend, z.B. mit Chloropren-Kautschuk-Klebstoffen, abdichtend verklebt, wobei sich gegenüber Verklebungen ohne Anwendung der erfindungsgemäßen Haftgrundierungen um 135 bis 350% höhere Schälwerte ergaben.

Tabelle 1

| Beispiel | 1 | 2 | 3 | 4 | 5 | 6 |
|---|---|---|---|---|---|---|
| **Monomere:** | | | | | | |
| iso-Butylmethacrylat | 65,0 | - | 72,0 | 72,0 | 72,0 | 62,0 |
| Octylmethacrylat | - | 65,0 | - | - | - | - |
| 1,4-Butandiol-dimethacrylat | 5,0 | 5,0 | 5,0 | 5,0 | 5,0 | 5,0 |
| **Elastomere:** | | | | | | |
| Chloropren-Kautschuk (CR)*1 | 15,0 | 15,0 | - | - | - | - |
| cis-1,4-Polybutadien(BR) | - | - | 10,0 | - | - | - |
| Styrol-Butadien-Kautschuk (SBR)*2 | - | - | - | 10,0 | - | - |
| Styrol-Ethylen-Butadien-Styrol-/Styrol-Ethylen-Propylen-Styrol-Blockcopolymer | - | - | - | - | 10,0 | - |
| chlorsulfoniertes Methylen (CSM) | - | - | - | - | - | 20,0 |
| Isopren-Isobutylen-Copolymer (IIR) | | | | | | |
| **Plastomere:** | | | | | | |
| Ketonharz | 5,0 | 5,0 | 5,0 | 5,0 | 5,0 | 5,0 |
| **Pigmente, Füllstoffe, Thixotropiermittel, Stabilisatoren:** | | | | | | |
| Titandioxid-Rutil | 2,5 | 2,5 | 2,5 | 2,5 | 2,5 | 2,5 |
| Schwerspat | 4,5 | 4,5 | 4,5 | 4,5 | 4,5 | 4,5 |
| pyrogene Kieselsäure (BET-Oberfläche: 200 $m^2/g$) | 1,0 | 1,0 | 1,0 | 1,0 | 1,0 | 1,0 |
| ZnO/MgO | 2,0 | 2,0 | - | - | - | - |
| Gew.% | 100,0 | 100,0 | 100,0 | 100,0 | 100,0 | 100,0 |

*1 niedrig-, mittel- oder hochkristallin

*2 kalt- oder heiß-polymerisierende SBR-Typen

EP 0 336 154 A2

Beispiel 7

Um für jede auf dem Markt erhältliche EPDM-Dachbahn eine optimale Haftgrundierung auszuwählen, erweist es sich als sinnvoll, den Typ der eingesetzten Photoinitiatoren zu variieren.

Den Einfluß, den verschiedene Typen von Photoinitiatoren auf die Wirksamkeit der Haftgrundierungen ausüben, zeigt die untenstehende Tabelle 2.

In den angeführten Experimenten 1 bis 5 wurde die Haftgrundierung mit verschiedenen Photoinitiatoren auf eine gegebene EPDM-Dachbahnqualität in einer Schichtstärke von ca. 100 μm aufgebracht und nachfolgend mit einer UV-Strahlungsquelle mit einer Wellenlänge von 366 nm photopolymerisiert. Bei den danach mit Chloropren-Kautschuk-Klebern als Nahtabdichtungsmittel verbundenen EPDM-Dachbahnen wurden im Vergleich zu Experiment 6, bei dem keine Haftgrundierung verwendet wurde, Zunahmen der Festigkeit der Verbindung im Bereich von 65 bis 150% erzielt.

EP 0 336 154 A2

## Tabelle 2

| Experiment | Mittlere Schälfestigkeiten $\bar{M}$ in N/25mm | | | Festigkeits-Rangfolge | Zunahme in % |
|---|---|---|---|---|---|
| | $\bar{M}$ 4d RT | $\bar{M}$ 4d RT und 3 h bei $80^{0}$C | Mittelwert aller $\bar{M}$ | | |
| **Haftgrundierung mit** | | | | | |
| 1. Photoinitiator Nr. 1 | 24,8 | 17,9 | 21,3 | 1. | + 150 |
| 2. Photoinitiator Nr. 2 | 18,1 | 13,2 | 15,6 | 4. | + 80 |
| 3. Photoinitiator Nr. 3 | 12,9 | 15,2 | 14,0 | 5. | + 65 |
| 4. Photoinitiator Nr. 4 | 23,2 | 18,1 | 20,6 | 2. | + 140 |
| 5. Photoinitiator Nr. 5 | 24,3 | 11,1 | 17,7 | 3. | + 110 |
| 6. Vergleichsversuch - ohne Haftgrundierung - | 5,5 | 11,5 | 8,5 | 6. | - |

Photoinitiatoren:

Nr. 1 = Arylketon

Nr. 2 = Acylphosphinoxid

Nr. 3 = Thioxanthon

Nr. 4 = Ferrocen-hexafluorophosphat

Nr. 5 = arylsulfonsaures Salz

"d" - Tage; "RT" - Raumtemperatur; "h" - Stunden

**Ansprüche**

1. Polymerisationsfähige Haftgrundierung für Polymere, dadurch gekennzeichnet, daß sie 60 bis 85 Gew.% Methacrylsäureester-Monomer, welches eine Quellung der Polymeren von 10 bis 50 Gew.% bewirkt, 5 bis 30 Gew.% in dem Monomer lösliches Elastomer, 0,5 bis 15 Gew.% Plastomerharz und bezogen auf das eingesetzte Monomer 0,5 bis 5 Gew.% Photoinitiator enthält.

2. Haftgrundierung nach Anspruch 1, dadurch gekennzeichnet, daß sie als Monomer einen Methacrylsäureester eines $C_4$-bis $C_8$-Alkohols oder Mischungen davon enthält.

3. Haftgrundierung nach Anspruch 2, dadurch gekennzeichnet, daß sie als Monomer n-Butylmethacrylat, iso-Butylmethacrylat, Octylmethacrylat oder 1,4-Butandioldimethacrylat oder Mischungen derselben enthält.

4. Haftgrundierung nach einem der Ansprüche 1 bis 3, dadurch gekennzeichnet, daß sie als Photoinitiator ein Arylketon, ein Acylphosphinoxid, ein Thioxanthon, ein arylsulfonsaures Salz oder ein Ferrocenhexafluorophosphat enthält.

5. Verfahren zur Ausrüstung von Polymeren mit einem Haftgrund für eine abdichtende Verklebung und/oder eine Beschichtung, dadurch gekennzeichnet, daß man die Haftgrundierung nach einem der Ansprüche 1 bis 4 auf die zu verklebenden und/oder zu beschichtenden Polymere aufbringt und anschließend die aufgebrachte Haftgrundierung polymerisiert.

6. Verfahren nach Anspruch 5, dadurch gekennzeichnent, daß die zu verklebenden und/oder zu beschichtenden Polymere Polymere auf der Basis von Kohlenwasserstoff sind.

7. Verfahren nach Anspruch 5, dadurch gekennzeichnet, daß die zu verklebenden und/oder zu beschichtenden Polymere Polymere auf der Basis von Ethylen-Propylen-Dien-Monomer, Ethylen oder Propylen bzw. deren Copolymerisate sind.

8. Verfahren nach Anspruch 5, dadurch gekennzeichnet, daß die zu verklebenden Polymere Dachbahnen auf der Basis von Ethylen-Propylen-Dien-Monomer-Elastomer sind.

9. Verfahren nach einem der Ansprüche 5 bis 8, dadurch gekennzeichnet, daß man eine Haftgrundierung verwendet, welche ein mit dem Abdichtungsmittel, Verklebungsmittel und/oder der Beschichtung verträgliches Elastomer enthält.

10. Verfahren zur Ausrüstung von Baustoffen mit einer Beschichtung, dadurch gekennzeichnet, daß man die Haftgrundierung nach Anspruch 2 oder Anspruch 3 auf den Baustoff aufbringt und anschließend die aufgebrachte Haftgrundierung polymerisiert.

11. Verfahren nach Anspruch 10, dadurch gekennzeichnet, daß der Baustoff Sandstein ist.